# EUROPEAN PATENT APPLICATION

(11) **EP 1 924 012 A1**
(43) Date of publication of application: **21.05.2008**
(21) Application number: 06797464.2
(22) Date of filing: 05.09.2006
(51) Int. Cl.: H04B 7/26, H04Q 7/20, H04Q 7/38

(54) **DATA TRANSMITTING SYSTEM, COMMUNICATION NODE AND DATA TRANSMITTING METHOD**

(30) Priority: 08.09.2005 JP 2005261374
(71) Applicant: NTT DoCoMo, Inc., Chiyoda-ku Tokyo 100-6150 (JP)
(72) Inventor: MOTEGI, Masayuki, Tokyo 1006150 (JP); KATO, Yasuhiro, Tokyo 1006150 (JP); ISHII, Minami, Tokyo 1006150 (JP); NAKAMURA, Takehiro, Tokyo 1006150 (JP)
(74) Representative: HOFFMANN EITLE
(86) International application number: PCT/JP2006/317564
(87) International publication number: WO 2007/029708

(57) **Abstract**

The present invention provides a data transmission system where MBMS data are transmitted to a mobile station in synchronization among multiple base stations without use of any central control node for controlling the multiple base stations. The data transmission system includes a communication node managing user common data, one or more radio base stations coupled to the communication node and one or more mobile stations. In the system, each of the one or more base stations is synchronized with absolute time commonly used by the base stations. The communication node includes a reception unit receiving the user common data for one or more users from a provider and a determination unit determining through communications with the one or more base stations a transmission timing when the one or more base stations transmit the user common data to the mobile stations.

## Description

### TECHNICAL FIELD

The present invention relates to the technical field of radio communications, and more particularly relates to a data transmission system where Multimedia Broadcast Multicast Services (MBMSs) are provided, and a communication node and a data transmission method for use in the system.

### BACKGROUND ART

In recent mobile communication systems, large volumes of packet-switching based multimedia services as well as circuit-switching based audio services are provided. In the third generation standardization organization, MBMSs are standardized for packet-switching type systems, and some arrangements of the associated architecture and radio channels are published: A base station or Node B informs a served mobile station (UE) of a MBMS Notification Indicator (NI) for prompting subscription of the MBMS. The mobile station selects one or more services, such as broadcasting of news programs, among the received NIs and transmits the selection to the base station. Then, a service subscription procedure may be initiated.

Base stations in this type of mobile communication system operate asynchronously with each other. In other words, signals to separate base stations are transmitted with time differences or offsets. A radio access network (RAN) is configured to include multiple base stations and a core radio network controller (RNC) for controlling the base stations. Also, in one standard Release 6 (R6), a protocol for U-plane, such as PDCP, RLC, MAC-c/sh and MAC-d, is provided to the RNC, and in the transmission of MBMS data, a single PDCP (Packet Data Convergence Protocol) and the RLC are used among the base stations in common.

In an interface (Iub) between the RNC and the base stations, FP (Frame Protocol) is used for the MBMS data transmitted from the RNC. The header of the FP is assigned a CFN (Connection Frame Number) indicative of a transmission timing of the MBMS data. Thus, the transmission timing can be made uniform over adjacent cells. A logical channel for the MBMS is mapped to FACH (Forward Access Channel), and a physical channel for transmitting the FACH is SCCPCH.

### DISCLOSURE OF INVENTION

### [PROBLEM TO BE SOLVED BY THE INVENTION]

A conventional RAN includes a core communication node (RNC) and a large number of base stations (Node Bs) coupled to the RNC, and these base stations operate asynchronously with each other. A radio channel SCCPCH (Secondary Common Control Physical Channel) for transmitting MBMS data is code-divided. Since the CFN attached MBMS data are transmitted from the RNC, the MBMS data can be transmitted in synchronization among the base stations.

However, the provision of the core communication node may cause communication delay and other problems within the RAN.

The present invention addresses at least one of the above-mentioned problems. One object of the present invention is to provide a data transmission system, a communication node and a data transmission method where MBMS data are transmitted to a mobile station in synchronization among multiple base stations without use of any central control node for controlling the multiple base stations.

### [MEANS FOR SOLVING THE PROBLEM]

In embodiments of the present invention, there is provided a data transmission system including a communication node managing user common data, one or more radio base stations coupled to the communication node and one or more mobile stations. In the system, each of the one or more base stations is synchronized with absolute time commonly used by the base stations. The communication node includes a reception unit receiving user common data for one or more users from a provider and a determination unit determining through communications with the one or more base stations a transmission timing when the one or more base stations transmit the user common data to the mobile stations.

### [ADVANTAGE OF THE INVENTION]

According to the embodiments of the present invention, it is possible to transmit MBMS data to a mobile station in synchronization among multiple base stations without use of any central control node for controlling the multiple base stations.

### BRIEF DESCRIPTION OF DRAWINGS

FIG. 1 shows a communication system according to one embodiment of the present invention;
FIG. 2 is a functional block diagram of BM-SC according to one embodiment of the present invention;
FIG. 3 is a functional block diagram of a Node B according to one embodiment of the present invention;
FIG. 4 is a flowchart illustrating an exemplary operation of the BM-SC according to one embodiment of the present invention;
FIG. 5 is a flowchart illustrating an exemplary operation of the Node B according to one embodiment of the present invention;
FIG. 6 is a flowchart illustrating another exemplary operation of the Node B according to one embodiment of the present invention; and
FIG. 7 schematically shows an exemplary periodic transmission of MBMS data from base stations to mobile stations.

### LIST OF REFERENCE SYMBOLS

11: route control device
12: network
13: BM-SC
14: radio base station
15: mobile station

### BEST MODE FOR CARRYING OUT THE INVENTION

In one embodiment of the present invention, a communication node (BM-SC) for use in a data transmission system receives user common data, communicates with one or more base stations and determines transmission timings for the one or more base stations transmitting the user common data to mobile stations. Since the functionality of a core node is provided to the base stations, such a core node may be unnecessary. The separate base stations are synchronized with each other through absolute time and thus can derive timings suitable for transmission of MBMS data by themselves. The derived respective suitable transmission timings are reported to the BM-SC, and in turn the BM-SC determines a transmission timing suitable for most of (ideally all) the base stations and indicates the transmission timing to the respective base stations.

Alternatively, the BM-SC may indicate a preset transmission timing to most of the base stations, and in turn the base stations may transmit only the MBMS data at the indicated transmission timing.

According to the embodiments of the present invention, the functionality of a radio access network (RAN) is provided to Node Bs, and thus even in a system configuration without the RNC for controlling the Node Bs, the same MBMS data can be transmitted from the respective Node Bs at the same timing. Also, the MBMS data exchanged among adjacent cells can be soft-combined. Furthermore, even if data are transmitted between the core network (CN) and the radio access network in accordance with Internet Protocol (IP) and thus significant delay occurs, a scheduler of the Node B can still be used to exchange the MBMS data among the Node Bs at the same timing.

In order to transmit user common data from separate base stations at a predetermined timing, radio channel resources may be reserved in advance. Thus, for example, the user common data can be transmitted at a constant period.

### [First embodiment]

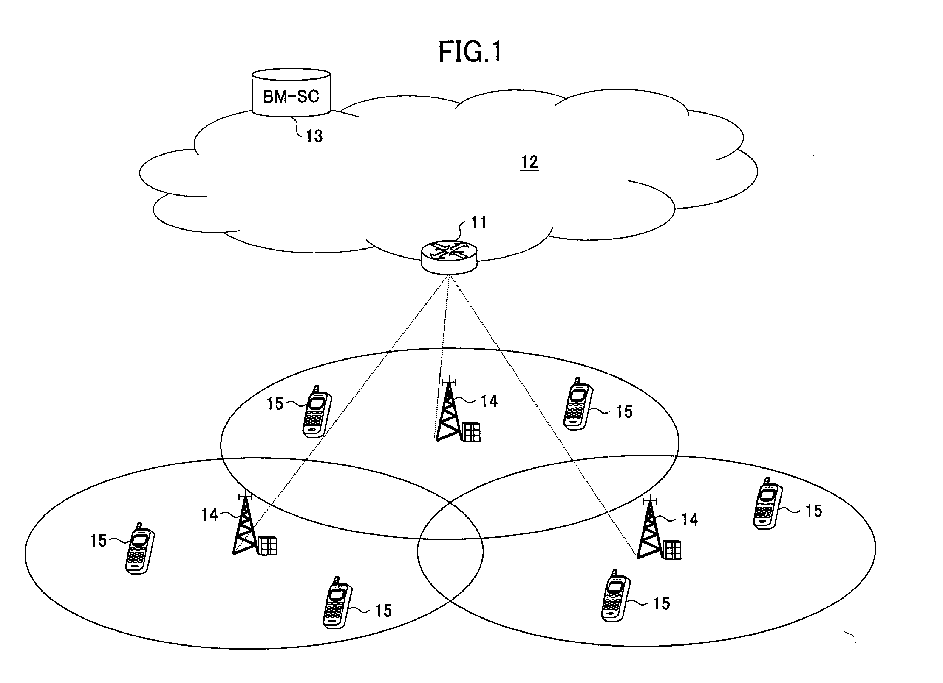

FIG. 1 shows a communication system according to one embodiment of the present invention. a communication system assumed in this embodiment includes a core network (CN) and a radio access network (RAN). The CN includes a route controller 11, a network 12 coupled to the route controller 11, and a BM-SC(Broadcast/Multicast Service Center) 13 for controlling transmission of MBMS data. The MBMS data may referred to as user common data, and the BM-SC may be referred to as a user common data controller. On the other hand, the RAN includes multiple base stations (Node Bs) 14 and multiple mobile stations (UEs) 15. Control signals necessary for the MBMS transmission and data are transmitted and received between the BM-SC and the UEs. In addition, control signals necessary for the MBMS transmission and data are transmitted and received between the BM-SC and the base stations.

The respective base stations are synchronized with absolute time determined by GPS (Global Positioning System) or some similar system and accordingly are synchronized with each other.

The MBMS data transmission is basically carried out in accordance with the IP within a network of the CN. However, the data transmission is hot limited to the IP-based transmission and may be carried out in accordance with protocols other than the IP.

One radio physical channel is defined between a Node B and a UE as a downlink channel from the Node B to the UE. A control signal for MBMS and MBMS data are transmitted over the radio physical channel.

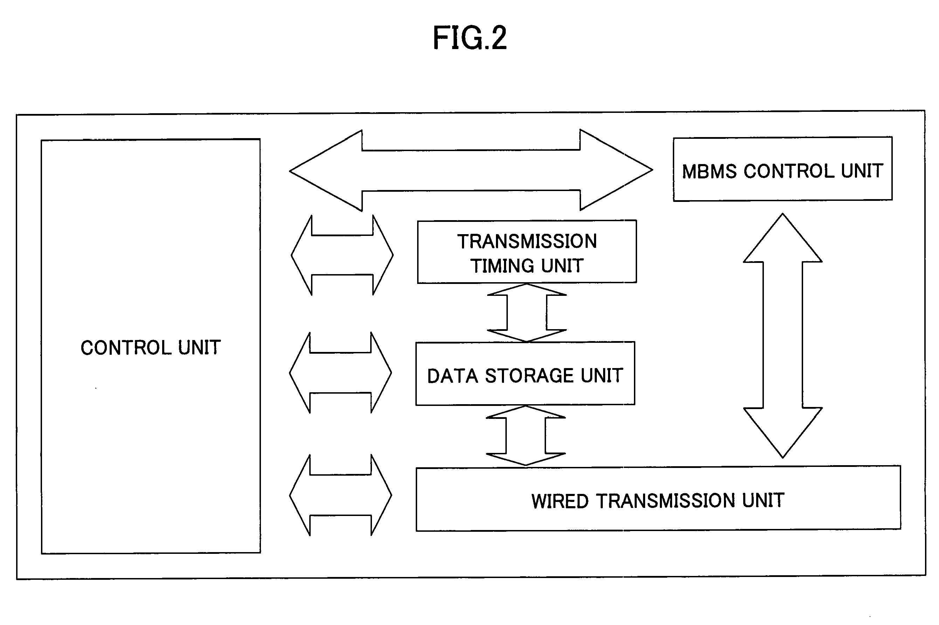

FIG. 2 is a functional block diagram of a BM-SC according to one embodiment of the present invention. As illustrated in FIG. 2, the BM-SC includes a control unit, a wired transmission unit, a transmission timing unit, a data storage unit and a MBMS control unit.

The control unit controls the overall operations of the BM-SC by controlling various functional entities of the BM-SC. The wired transmission unit is operable to receive MBMS data transmitted from content providers (CPs) within the same CN or CPs within a common PDN (Public Data Network). The wired transmission unit is operable to transmit the MBMS data to the Node Bs. The wired transmission unit is further operable to transmit control signals between the Node Bs, the UEs and the BM-SC. The MBMS control unit is operable to control MBMS sessions, such as transmission start timings, transmission duration, the times of transmission repetitions, to one or more Node Bs. The data storage unit is operable to store the MBMS data received from the CPs. The transmission timing unit is operable to transmit the MBMS data based on the transmission timing within the MBMS sessions.

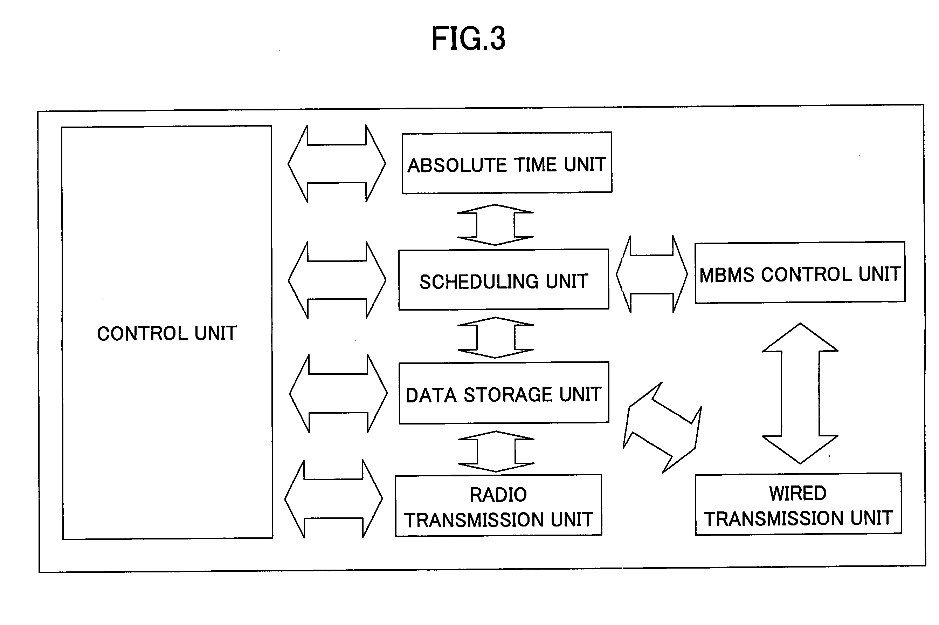

FIG. 3 is a functional block diagram of a base station according to one embodiment of the present invention. As illustrated in FIG. 3, the base station includes a control unit, a radio transmission unit, a wired transmission unit, a MBMS control unit, a scheduling unit, a data storage unit and an absolute time acquisition unit.

The control unit controls the overall operations of the base station by controlling various functional entities of the base station.

The radio transmission unit is operable to perform some operations, including generation, modulation and encoding, on transport blocks (TBs) necessary to transmit MBMS data transmitted from the BM-SC to UEs subscribing MBMS services over radio channels. The radio transmission unit is operable to transmit radio channels at the timing synchronized with the absolute time among adjacent Node Bs.

The wired transmission unit is operable to receive the MBMS data transmitted from the BM-SC. The wired transmission unit is operable to communicate control signals between the Node Bs and the BM-SC.

The MBMS control unit is operable to conduct signaling of MBMS sessions between the Node Bs and the BM-SC. The MBMS control unit is operable to reflect the timing designated by the BM-SC to the scheduler of the Node Bs. For example, the MBMS control unit may inform the BM-SC of some requests for one or more of the transmission start timing, the transmission duration, the number of transmission repetition times, and others. As stated below, upon the requests from the Node Bs, the BM-SC determines session contents based on the absolute time.

The scheduling unit is operable to perform scheduling so as to transmit the MBMS data in a radio channel at the timing specified by the MBMS control unit.

The data storage unit is operable to store the MBMS data before the MBMS data received from the wired transmission unit are transmitted.

The absolute time acquisition unit is operable to obtain the absolute time from GPS or some similar system for providing the absolute time. For example, there is a method where signals are obtained from a master or mobile stations in NW for synchronization. The absolute time acquisition unit is operable to adjust the absolute time of the scheduler. The absolute time acquisition unit is operable to synchronize radio channels with the absolute time.

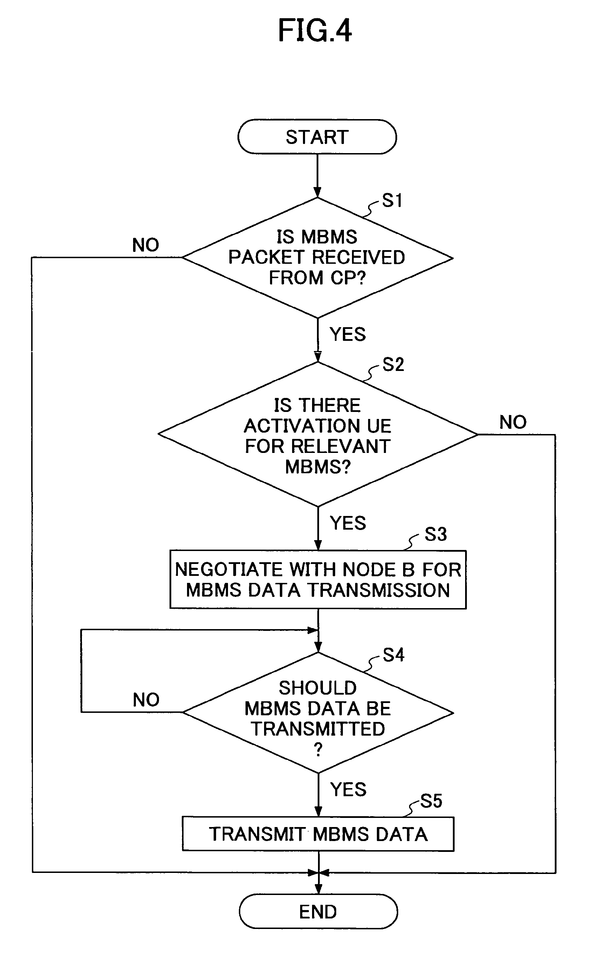

FIG. 4 shows an operational flow of the BM-SC according to one embodiment of the present invention. At step S1, the BM-SC determines whether to receive MBMS data from a CP within its own network or PDN. If it is determined at step S1 that no MBMS data are received, the process terminates. On the other hand, if it is determined at step S1 that the MBMS data are received, the BM-SC temporarily stores the MBMS data in itself and confirms user's intention on the MBMS data at step S2. Specifically, the BM-SC determines whether a base station distributes an advertisement of the MBMS (notification indicator (NI)) and a UE responds to the advertisement.

The status of a user responding to the advertisement to exhibit the user's interest may be referred to as activation. If it is determined at step S2 that no UE has the activation to the MBMS of interest, the process terminates. On the other hand, if it is determined at step S2 that some UE has the activation to the MBMS data, the MBMS data have to be transmitted to the UE. In this case, at step S3, some agreement on MBMS sessions is made between the Node B and the BM-SC. In this agreement or control instructions, it may be determined that transmission of the MBMS data of interest is initiated at the time 15:00:00, continues for one minute and is repeated the five times in the time interval of 5 minutes. In particular, the Node Bs may submit requests for the transmission start time and others to the BM-SC and then the BM-SC may determine the appropriate transmission start time and others based on the requests. Also, the transmission timing including the transmission interval may be determined together with some margin by taking into account variable delay in transmission routes from the CN to the Node Bs. In this embodiment of the present invention, the contents of the MBMS sessions are determined through the agreement between multiple Node Bs and the BM-SC, which is significantly different from conventional schemes where the contents of the MBMS sessions are determined by the BM-SC or the RNC side unilaterally. According to this embodiment, each Node B is synchronized with each other through the absolute time, and thus the agreement of the contents of the MBMS sessions can be made without use of any core RNC.

At step S4, the MBMS data are transmitted in conformity with the agreement between the Node Bs and the BM-SC. At step S4, it is determined whether the current timing corresponds to the transmission schedule of the MBMS data. If it is determined that the current timing corresponds to the transmission timing of the MBMS data, the MBMS data are sequentially transmitted at step S5. The transmission is carried out a specified number of times in an indicated interval, and then the process terminates. On the other hand, it is determined at step S4 that the current timing does not correspond to the transmission schedule of the MBMS data, the process waits before the next scheduled timing.

Note that the present invention is not limited to the iterative transmission of MBMS data. However, it is desirable that the MBMS data be transmitted several times as described in conjunction with this embodiment from the viewpoint of consistency with existing IMT-2000 systems. In such an existing system, no control is directed to individual retransmission of the MBMS data in radio sections (in the R6, retransmission control in the RLC), and instead the same data are transmitted several times.

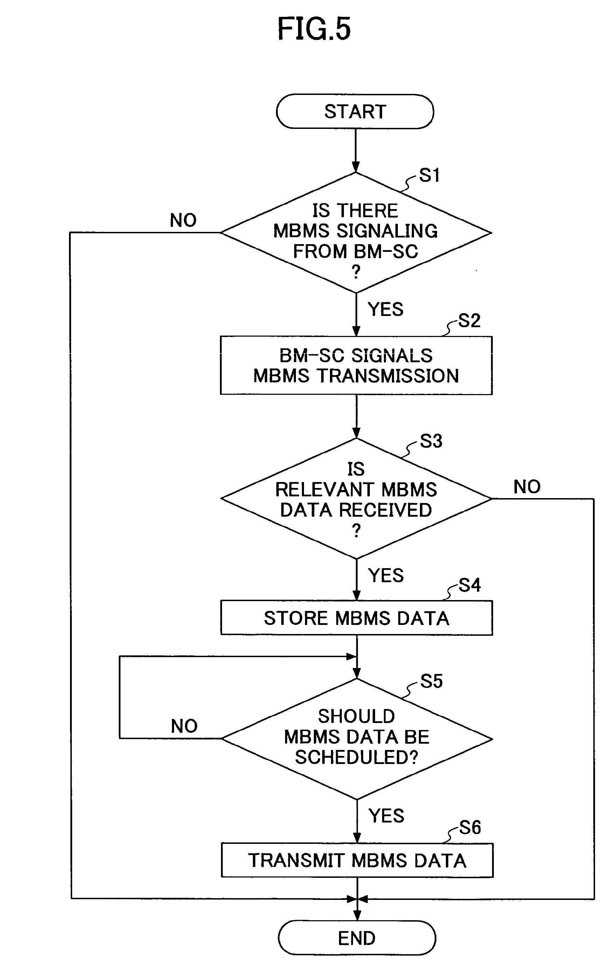

FIG. 5 shows an operational flow of the Node B according to one embodiment of the present invention. At step S1, the Node B determines whether to receive signaling on MBMS data from the BM-SC. If it is determined at step S1 that the signaling is received, the Node B examines some parameters indicative of the signaling such as QoS of the contents and streaming delay time. On the other hand, if it is determined at step S1 that no signaling is received from the BM-SC, the process terminates. At step S2, a MBMS transmission timing determined between the Node B and the BM-SC is stored in the MBMS control unit. Next at step S3, the Node B determines whether to receive the MBMS data from the BM-SC. If it is determined at step S3 that the Node B does not receive the MBMS data, the process terminates. On the other hand, if it is determined at step S3 that the MBMS data are received, the MBMS data storage unit temporarily stores the MBMS data at step S4. Next at step S5, the Node B determines whether the current time point corresponds to the scheduled timing stored in the MBMS control unit. If it is determined at step S5 that the current time point corresponds to the transmission scheduled timing of the MBMS data as determined between the Node B and the BM-SC, the MBMS data are transmitted.

### [Second embodiment]

A communication system assumed in a second embodiment of the present invention is similar to the above-mentioned communication system of the first embodiment, but the second embodiment differs from the first embodiment in that a portion enabling a logical channel for MBMS to be transmitted in a radio channel is definitely specified. In other words, a radio channel resource, such as timing and frequency, is reserved for transmission of MBMS data in advance. In this embodiment, resources are periodically reserved for data transmission in a constant time interval. Alternatively, in another embodiment, the resources may be non-periodically reserved.

Although the block diagram of a Node B assumed in this embodiment is the same as FIG. 3, the functions of elements may differ. The Node B includes a control unit, a radio transmission unit, a wired transmission unit, a scheduling unit, a data storage unit, a MBMS control unit and an absolute time acquisition unit.

The control unit controls the overall operations of the Node B by controlling functional entities of the Node B.

The radio transmission unit is operable to process transport blocks for transmitting MBMS data delivered from the BM-SC in a radio channel receivable at multiple UEs . The radio transmission unit is operable to perform operations necessary for radio communication such as modulation and coding.

The wired transmission unit is operable to receive MBMS data transmitted from the BM-SC. The wired transmission unit is operable to perform operations necessary to communicate control signals between the Node B and the BM-SC over a wired transmission route.

The scheduling unit is operable to schedule transmission of the MBMS data in a radio channel at the transmission timing of a MBMS radio channel specified by the MBMS control unit.

The data storage unit is operable to store the MBMS data before the MBMS data received from the BM-SC are transmitted.

The MBMS control unit is operable to communicate control signals for MBMS sessions between the Node B and the BM-SC. The MBMS control unit is operable to reflect the transmission timing of the MBMS data to the scheduler of the Node B.

The absolute time acquisition unit is operable to obtain the absolute time from GPS or some similar clock sources. The absolute time acquisition unit is operable to adjust the absolute time of the scheduler. The absolute time acquisition unit is operable to synchronize a radio channel with the absolute time.

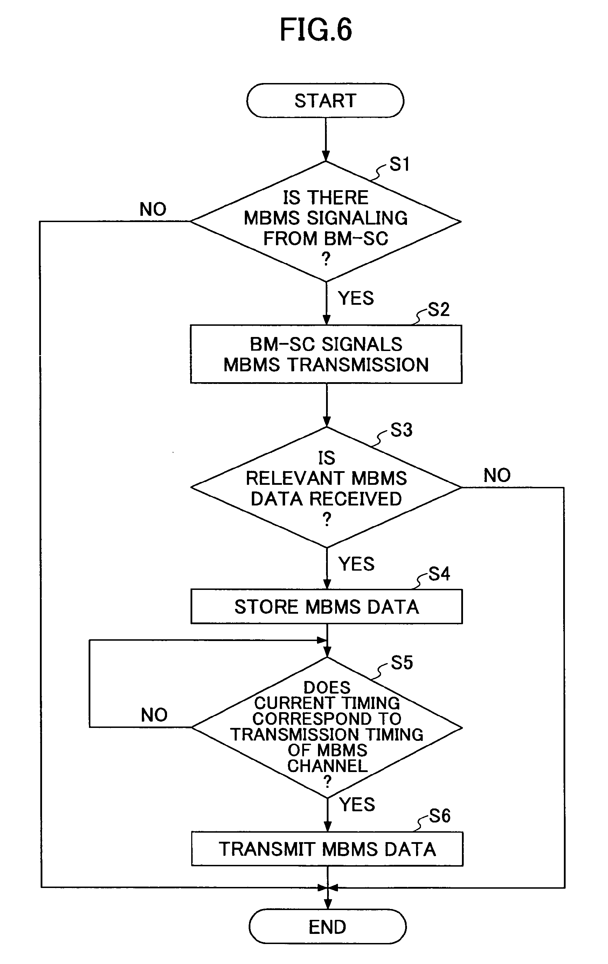

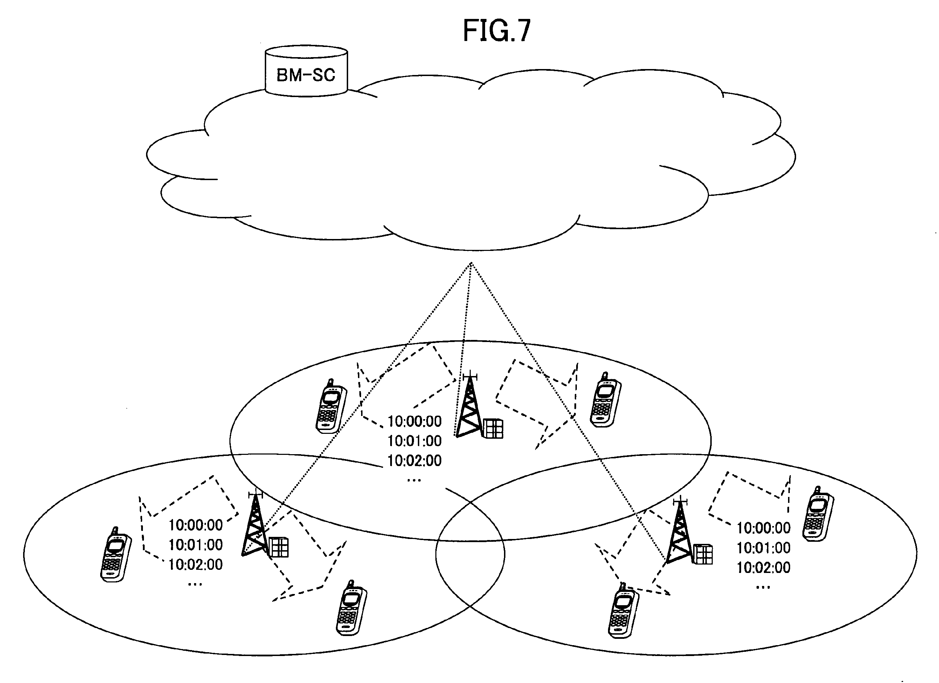

FIG. 6 is a flowchart of exemplary operations of the Node B according to one embodiment of the present invention. Similar to the process flow illustrated in FIG. 5, the Node B determines whether to receive signaling for MBMS data from the BM-SC at step S1. If it is determined at step S1 that the signaling is received, the Node B examines parameters indicative of the signaling such as the QoS of the contents and the streaming delay time. If it is determined at step S1 that no signaling is received, the process terminates. At step S2, the MBMS control unit stores the MBMS transmission timing determined between the Node B and the BM-SC. Next at step S3, it is determined whether the relevant MBMS data are received from the BM-SC. If it is determined at step S3 that the relevant MBMS data are not received, the process terminates. On the other hand, if it is determined at step S3 that the relevant MBMS data are received, the MBMS data storage unit temporarily stores the relevant MBMS data at step S4. Then, it is determined at step S5 whether the current time point corresponds to the transmission timing of a MBMS radio channel. If it is determined at step S5 that the current time point corresponds to the transmission timing of the MBMS radio channel, the relevant MBMS data are transmitted, and then the process terminates. In contrast with the first embodiment, resources of a radio channel for transmission of the MBMS data have been reserved, and thus no scheduling has to be performed at this point. As illustrated in FIG. 7, these operations cause the MBMS data to be periodically transmitted from the base station to mobile stations. In the illustrated example, the data are transmitted from 10:00:00 every one minute.

### [Industrial applicability]

A data transmission system, a communication node and a data transmission method according to the present invention can be applied to mobile communication systems.

This international patent application is based on Japanese Priority Application No. 2005-261374 filed on September 8, 2005, the entire contents of which are hereby incorporated by reference.

## Claims

1. A data transmission system including a communication node managing user common data, one or more radio base stations coupled to the communication node, and one or more mobile stations,
each of the one or more base stations being synchronized with absolute time commonly used by the base stations,
the communication node comprising a reception unit receiving user common data for a user from a provider; and a determination unit determining through communications with the one or more base stations a transmission timing when the one or more base stations transmit the user common data to the mobile stations.

2. The data transmission system as claimed in claim 1, wherein resources for a radio channel are reserved in advance so as to transmit the user common data from the respective base stations at a predefined timing.

3. A communication node for use in a data transmission system including one or more base stations and one or more mobile stations, the communication node being coupled to the one or more base stations, the communication node comprising:
a reception unit receiving user common data for a user from a provider; and
a determination unit determining through communications with the one or more base stations a transmission timing when the one or more base stations transmit the user common data to the mobile stations,
wherein each of the base stations is synchronized with absolute time commonly used by the base stations.

4. The communication node as claimed in claim 3, wherein the transmission timing when the one or more base stations transmit the user common data to the mobile stations is periodic.

5. A data transmission method for use in a data transmission system including a communication node managing user common data, one or more radio base stations coupled to the communication node, and one or more mobile stations, the method comprising the steps of:
synchronizing each of the one or more base stations with absolute time commonly used by the base stations;
receiving user common data for a user from a provider at the communication node; and
determining at the communication node a transmission timing when the one or more base stations transmit the user common data to the mobile stations through communications with the one or more base stations.
